# EUROPÄISCHE PATENTSCHRIFT

(11) **EP 2 599 608 B1**
(45) Veröffentlichungstag und Bekanntmachung des Hinweises auf die Patenterteilung: **22.02.2017**
(21) Anmeldenummer: 12195357.4
(22) Anmeldetag: 03.12.2012
(51) Int. Cl.: B29C 45/14, B29C 45/33

(54) **Spritzgießwerkzeug, insbesondere Backenwerkzeug**
Injection moulding too, in particular a jaw tool
Outil de moulage par injection, notamment un outil à mâchoires mobiles

(30) Priorität: 02.12.2011 AT 17842011
(43) Veröffentlichungstag der Anmeldung: 05.06.2013
(73) Patentinhaber: Haidlmair Holding GmbH, 4542 Nussbach (AT)
(72) Erfinder: Weiermeier, Gerhard, 4560 Kirchdorf an der Krems (AT)
(74) Vertreter: Jell, Friedrich

(56) Entgegenhaltungen:
- EP-A1- 1 563 978
- EP-A1- 1 950 025
- EP-A2- 2 098 352
- DE-A1- 3 111 254
- DE-A1-102004 009 406
- DE-B3-102005 013 723

## Beschreibung

Die Erfindung betrifft ein Spritzgießwerkzeug, insbesondere Backenwerkzeug, zur Erzeugung eines über einen Eckbereich wenigstens teilweise folienbeschichten Formteils, insbesondere Flaschenkastens, mit einer Kavität für das zu erzeugende Formteil, mit wenigstens zwei Formbacken, die bei geschlossenem Spritzgießwerkzeug mit ihren Formbackenflächen aneinander angrenzen und einen Eckbereich der Kavität zumindest bereichsweise ausbilden, mit einer die Kavität zumindest teilweise ausbildenden Formplatte und mit einer mit den Formbacken verbundenen Führung zur beweglichen Lagerung der Formbacken gegenüber der Formplatte, welche Führung für jeden Formbacken sowohl eine Backenführung zur beweglichen Lagerung des Formbackens als auch eine Linearführung zur beweglichen Lagerung der Backenführung gegenüber der Formplatte aufweist, wobei die gegenüber der Linearführung geneigten Backenführungen zweier Formbacken für ein Zusammenführen ihrer Formbackenflächen bei geöffnetem Spritzgießwerkzeug ausgebildet sind.

Um Formteile mit Hinterschneidungen entformen zu können, sind aus dem Stand der Technik Spritzgießwerkzeuge bzw. Backenwerkzeuge bekannt, die sich mit beweglichen Formbacken aus Hinterschneidungen lösen und so vom Formteil entfernt werden können (DE4208351C1). Des Weiteren ist bekannt, in eine Kavität eine Folie einzulegen, um diese Folie zu hinterspritzen. Es ist jedoch vergleichsweise konstruktiv aufwendig, eine Folie in Eckbereichen von aneinander angrenzenden Formbacken vorzusehen, insbesondere wenn die Folie diese Ecken zudem umlaufen soll. Aus diesem Grund schlägt die DE102004009406B4 vor, einen Eckbereich der Kavität von einer Formbacke auszubilden. Zwar kann damit der konstruktive Aufwand des Werkzeugs zur Eckausbildung und Folienaufnahme entschärft werden, deren Backenwerkzeuge fordern jedoch einen erheblichen konstruktiven Mehraufwand in ihrer Führung. Hinzu kommt, dass ein winkeliges Backenwerkzeug nur eine bestimmte Form von Hinterschneidungen am Formteil zulässt, so dass deren Verwendungsmöglichkeiten begrenzt sind.

Außerdem ist aus dem Stand der Technik ein Spritzgießwerkzeug bekannt (DE102005013723B3), das zweiachsig gelagerte Formbacken zeigt, um bei offenem Spritzgießwerkzeug die Formbacken zusammenführen und damit eine Folie über den Eckbereich der Formbacken legen zu können. Zu diesem Zweck können die Formbacken bei geöffnetem Spritzgießwerkzeug in horizontaler Richtung aufeinander zugefahren werden. Nach einem Einlegen der Folie werden die Formbacken in zusammengeführter Lage der Formplatte zugeführt und das Spritzgusswerkzeug geschlossen. Nachteilig erfordert solch eine Zwangskopplung zwischen Formbacken und Führung einen vergleichsweise hohen Steuerungs- bzw. Konstruktionsaufwand, denn selbst ein schmales Öffnen der zusammenführen Formbacken kann zum plastischen Verformen der Folie führen und damit die Reproduzierbarkeit des hergestellten Formteils gefährden. Zudem kann solch eine Konstruktion eine hohe Taktzeit in der Herstellung eines Formteils nicht gewährleisten.

Ein weiterer Stand der Technik nach dem Oberbegriff des Anspruchs 1 ist aus der DE102005013723B3 bekannt.

Die Erfindung hat sich daher die Aufgabe gestellt, ein Spritzgießwerkzeug der eingangs geschilderten Art derart konstruktiv zu verbessern, dass damit schnell und zuverlässig ein Formteil mit einer Folie in seinem Eckbereich hergestellt werden kann. Zudem soll das Spritzgießwerkzeug mechanisch einfach und kostengünstig herstellbar sein.

Die Erfindung löst die gestellte Aufgabe dadurch, dass zwischen zwei Formbacken eine Koppelstange zur mechanischen Bewegungskopplung der beiden Formbacken vorgesehen ist, wobei die an einem Formbacken befestigte Koppelstange durch eine Öffnung des anderen Formbackens geführt wird und in eine Führungskulisse an der Backenführung eingreift, die die Formbacke mit der Öffnung für die Koppelstange lagert.

Die Konstruktionsverhältnisse für ein Zusammenspiel der Führungsteile der Führung können gegenüber dem Stand der Technik erheblich vereinfacht werden, wenn zwischen zwei Formbacken eine Koppelstange zur mechanischen Bewegungskopplung der beiden Formbacken vorgesehen ist. Ein mechanisch einfach aufgebautes und kostengünstig herstellbares Spritzgießwerkzeug kann so geschaffen werden. Zudem kann durch solch eine mechanische Kopplung eine aufeinander kräftemäßig ausgeglichene Bewegung der Formbacken geschaffen werden, was einem formschonenden Entformen des Formteils zu Gute kommen kann. Damit kann schnell und zuverlässig ein Formteil mit einer Folie in seinem Eckbereich hergestellt werden, das dennoch gegenüber Hinterschneidungen deutlich leichter zu entformen sein kann. Die Folie kann an den Formbacken befestigt, insbesondere über Haltemittel mit Unterdruck daran angezogen, werden. Sobald die Folie an den beiden aneinander angrenzenden Formbackenflächen anliegt, können die zusammengefahrenen Formbacken über die Linearführung in eine geschlossene Lage am Spritzgießwerkzeug bewegt werden. Eine Änderung der Parameter hinsichtlich Lage und Position der Folie gegenüber den Formbacken kann somit nicht erwartet werden, weil die an den betreffenden Formbacken angreifende mechanische Kopplung bzw. Zwangskopplung einen geschlossenen Eckbereich sicherstellt. Das erfindungsgemäße Spritzgießwerkzeug kann somit höchste Genauigkeitsanforderungen bei einem zu erzeugenden folienbeschichteten Formteil, insbesondere einem über eine Ecke folienbeschichteten Flaschenkasten, erfüllen.

Im Allgemeinen wird erwähnt, dass Backenführungen vergleichsweise konstruktiv einfach lösbar sind. Bekannte Konstruktionen für Führungen, beispielsweise Schwalbenschwanzführungen, können dafür verwendet werden. Ein kostengünstiges und besonders standfestes Spritzgießwerkzeug kann so geschaffen werden. Zudem kann diese Führung mit der zweiachsigen Bewegbarkeit jedes Führungsbackens gegenüber der Formplatte für eine vereinfachte Folieneinbringung in die Kavität sorgen, sodass die Formbacken, von der Formplatte beabstandet, eine Lage mit aneinander angrenzenden Formbackenflächen einnehmen können. Damit kann auch auf konstruktiv aufwendige Handlingvorrichtungen verzichtet werden, wie diese aus dem Stand der Technik bekannt sind, um in ein Spritzgießwerkzeug eine Folie für ein Hinterspritzen einzubringen.

Da die an einem Formbacken befestigte Koppelstange durch eine Öffnung des anderen Formbackens geführt wird, ist auf einfache Weise für eine breite Lagerung
der Koppelstange und damit für verminderte Belastungen der Formbacken gesorgt. Durch die Verlängerung der Lebensdauer der Formbacken kann eine erhöhte Standfestigkeit des Werkzeugs erreicht werden.

Der Bewegungsablauf der Formbacken beim Öffnen bzw. Schließen des Spritzgießwerkzeugs wird auf einfache Weise gesteuert, da die Koppelstange
in eine Führungskulisse an der Backenführung eingreift, die die Formbacke mit der Öffnung für die Koppelstange lagert. Die Führungskulisse kann hierzu vorteilhaft auf einfache Weise als Ausnehmung in einer Backenführung vorgesehen werden. Ein kostengünstiges Spritzgießwerkzeug kann sich so ergeben.

Ein für Flaschenkasten ausreichend entformbares Spritzgießwerkzeug kann geschaffen werden, wenn vier Formbacken vorgesehen sind, die sich in zueinander unterschiedlichen Richtungen von der Formplatte wegbewegen lassen. Dies kann ein Entformen von Hinterschneidungen jeglicher Art am Formteil zulassen, wodurch ein äußerst flexibel anwendbares Spritzgießwerkzeug geschaffen werden kann.

Ausgeglichene Belastungsaufnahmen im Spritzgießprozess können durch die Symmetrie am Formteil gewährleistet werden, wenn die schräg der Formplatte zulaufenden Linearführungen den gleichen Winkel zur Formplatte aufweisen. Einfache Konstruktionsverhältnisse für eine mechanische Kopplung der Formbacken können geschaffen werden, in dem die Formbacken entlang der jeweiligen Backenschließplatte der Backenführung geführt sind.

Verlaufen die Backenführungen horizontal, was nicht Teil der vorliegenden Erfindung ist, kann der konstruktive Aufwand für den Bewegungsablauf der Formbacken beim Öffnen bzw. Schließen des Spritzgießwerkzeugs zusätzlich gering gehalten werden. Dies kann unter anderem zur Herstellung eines kostengünstigen Spritzgießwerkzeugs genützt werden.

Einfache Konstruktionsverhältnisse können sich ergeben, wenn die jeweilige Backenführung durch zwei parallele Schwalbenschwanzführungen ausgebildet wird.

In den Figuren ist beispielsweise der Erfindungsgegenstand anhand eines Ausführungsbeispiels näher dargestellt. Es zeigen
- Fig. 1: eine dreidimensionale Teilansicht auf ein geöffnetes Spritzgießwerkzeug mit Formbacken, die zur Folieneinbringung aneinander anliegen,
- Fig. 2: eine Draufsicht auf das nach Fig. 1 dargestellte Spritzgießwerkzeug,
- Fig. 3: eine Draufsicht auf das geschlossene Spritzgießwerkzeug nach Fig. 1 in Vorbereitung zum Hinterspritzen einer Folie und
- Fig. 4: eine Draufsicht auf das geöffnetes Spritzgießwerkzeug nach Fig. 1 nach dem Entformen des Formteils.

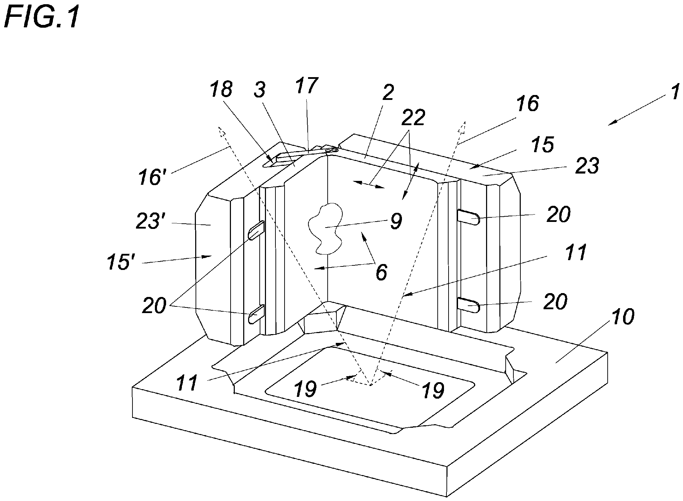

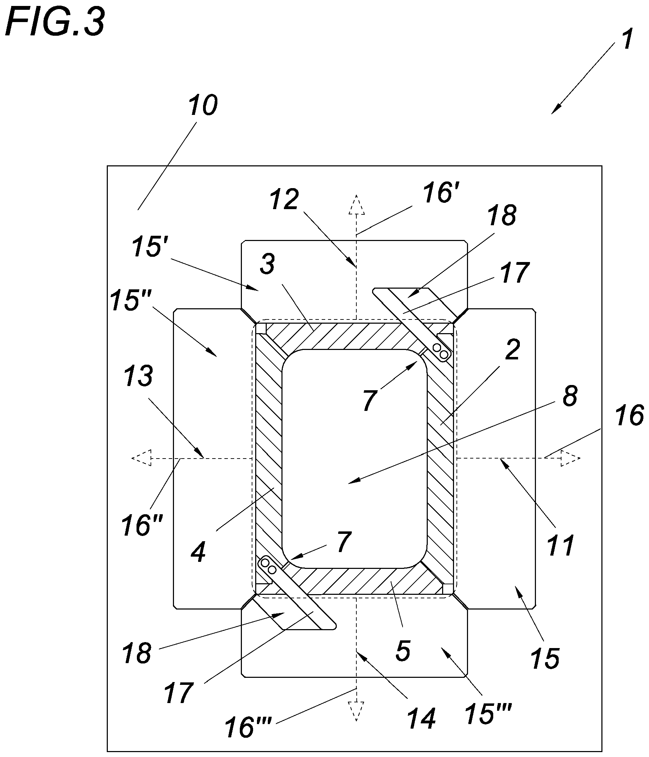

Das beispielsweise nach Fig. 3 dargestellte geschlossene Spritzgießwerkzeug 1 weist vier Formbacken 2, 3, 4, 5 auf. Die Formbacken 2, 3, 4, 5 grenzen bei geschlossenem Spritzgießwerkzeug 1 mit ihren Formbackenflächen 6 aneinander an und bilden so einen Eckbereich 7 einer Kavität 8 für ein nicht näher dargestelltes Formteil aus. In den Eckbereich 7 ist eine Folie 9 eingesetzt, die sich von einem Formbacken 2 auf den anderen Formbacken 3 erstreckt, wie dies beispielsweise der Fig. 1 entnommen werden kann. Dadurch wird es möglich, eine sich über eine Ecke des Formteils ziehende Folie 9 zu hinterspritzen. Das Spritzgießwerkzeug 1 weist weiter eine Formplatte 10 auf, die die Kavität 8 teilweise begrenzt. Gegenüber der Formplatte 10 sind nun die Formbacken 2, 3, 4, 5 mit Hilfe einer Führung 11, 12, 13, 14 beweglich gelagert, um das Formteil, das nicht näher dargestellte Hinterschnitte aufweist, nach seinem Spritzgießen aus dem Spritzgießwerkzeug 1 entnehmen zu können. Für eine vielseitige Handhabung des Spritzgießwerkzeug 1 besteht die Führung 11, 12, 13, 14 für jeden Formbacken 2, 3, 4, 5 aus zwei Führungsteilen, nämlich einer Backenführung 15, 15', 15", 15'" und einer Linearführung 16, 16', 16", 16'". Die Linearführung 16, 16', 16" bzw. 16'" ermöglicht eine bewegliche Lagerung der Backenführung 15, 15', 15" bzw. 15"' gegenüber der Formplatte 10. Zu diesem Zweck sind nicht näher dargestellte und an der Formplatte 10 befestigte Führungssäulen vorgesehen, auf denen die Backenführung 15, 15', 15" bzw. 15"' der jeweiligen Führung 11, 12, 13, 14 verschiebbar gelagert ist. Die beispielsweise Backenschließplatten 23, 23', 23", 23"' aufweisende Backenführungen 15, 15', 15" bzw. 15"' lagern die Formbacken 11, 12, 13 und 14 über Schwalbenschwanzführungen 20. Die Formbacken 2, 3, 4 und 5 sind so entlang der jeweiligen Backenschließplatte 23, 23', 23", 23"' der Backenführung 15, 15', 15" bzw. 15"' geführt. Durch solch eine Führung 11, 12, 13 und 14 kann die in einer anderen Bewegungsachse verlaufende Backenführung 15, 15', 15" bzw. 15"' bewerkstelligen, dass zwei Formbacken 2, 3 bzw. 4, 5 auch in einer gegenüber der Formplatte 10 beabstandeten Lage zusammengeführt werden können.

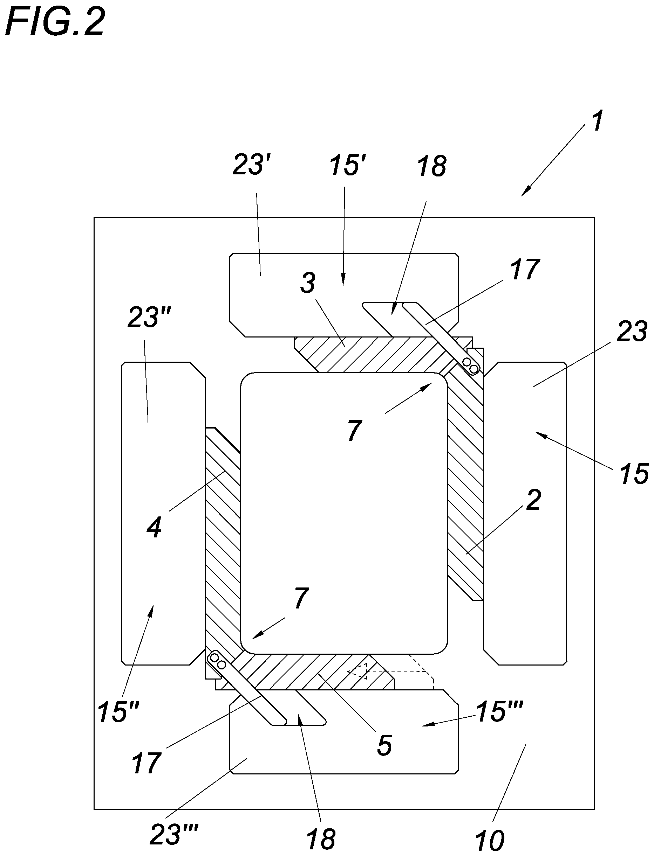

Solch eine Lage ist in den Figuren 1 und 2 dargestellt. Hier schließen die Formbackenflächen 6 der beiden Formbacken 2, 3 bzw. 4, 5 aneinander an, so dass im Eckbereich 7 und in einer geöffneten Lage des Spritzgießwerkzeug 1 eine zu hinterspritzende Folie 9 positionsgenau eingebracht werden kann. Ist die Folie 9 dann eingebracht und eventuell über nicht näher dargestellte Haltemittel, beispielsweise mithilfe von Unterdrucköffnungen an den Formbacken 2, 3 bzw. 4, 5 befestigt, kann das Spritzgießwerkzeug 1 ohne Lagebeeinträchtigung der in den Eckbereichen 7 vorgesehen Folie 9 geschlossen und hinterspritzt werden. Das Schließen kann über die Linearführung 16, 16', 16" bzw. 16'" ermöglicht werden. Damit ist nicht nur ein zum Hinterspritzen von Folien 9 einfach handhabbares Spritzgießwerkzeug 1 geschaffen, weil die Formbacken 2, 3 bzw. 4, 5 jeweils zweiachsig gegenüber der Formplatte 10 bewegbar sind, sondern es kann damit auch die Herstellung eines formgenauen Formteils sichergestellt werden. Diese zweiachsige Bewegbarkeit 22 ist beispielswiese für den Formbacken 2 in der Fig. 1 eingetragen.

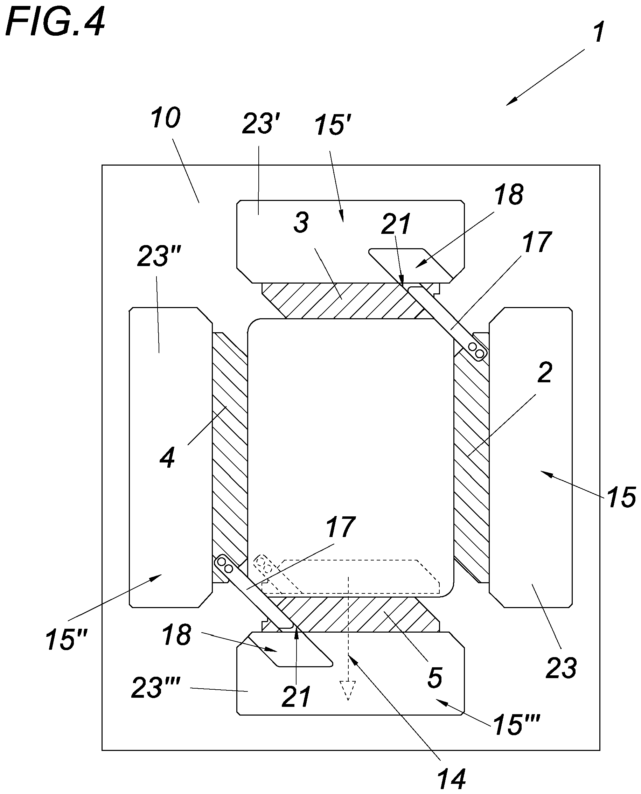

Die beiden Formbacken 2, 3 bzw. 4, 5 sind über je eine Koppelstange 17 mechanisch zwangsgekoppelt, so dass deren Bewegungsablauf synchronisiert und abgeglichen ist, was in den Figuren 1 bis 4 erkannt werden kann. Gegenüber dem Stand der Technik ergibt sich damit eine konstruktiv einfache Lösung, was zeitgeringe Zyklen zum Herstellen von Formteilen ermöglicht. Zudem ist durch diese mechanische Kopplung auch sichergestellt, dass sich die zwangsgekoppelten Formbacken 2, 3 bzw. 4, 5 beim Schließen des Spritzgießwerkzeugs 1 nicht öffnen. Eine Beschädigung der eingelegten Folie 9 ist daher stets zu vermeiden, was eine hohe Reproduzierbarkeit in der Herstellung formgenauer Formteilen erlaubt.

Auf der einen Seite ist die Koppelstange 17 an einem Formbacken 2 bzw. 4 befestigt, auf der anderen Seite ist die Koppelstange 17 durch eine Öffnung 21 des anderen Formbackens 3 bzw. 5 geführt. Damit kann eine standfeste Kopplung der beiden Formbacken 2, 3 und 4, 5 ermöglicht werden.

Eine Backenführung 15', 15'" für einen Formbacken 3 bzw. 5 bildet eine Führungskulisse 18 aus, in die die Koppelstange 17 eingreift. Die zueinander mögliche Bewegbarkeit der Formbacken 2, 3 bzw. 4, 5 kann sich durch die Ausgestaltung der Führungskulisse 18 ergeben.

Dadurch dass die schräg der Formplatte 10 zulaufenden Linearführungen 16 den gleichen Winkel 19 zur Formplatte aufweisen, ergibt sich ein symmetrischer Aufbau am Spritzgießwerkzeug 1 sowie auch ein gleichförmiger Bewegungsablauf des Spritzgießwerkzeugs 1.

## Patentansprüche

1. Spritzgießwerkzeug, insbesondere Backenwerkzeug, zur Erzeugung eines über einen Eckbereich (7) wenigstens teilweise folienbeschichteten Formteils, insbesondere Flaschenkastens, mit einer Kavität (8) für das zu erzeugende Formteil, mit wenigstens zwei Formbacken (2, 3, 4, 5), die bei geschlossenem Spritzgießwerkzeug (1) mit ihren Formbackenflächen (6) aneinander angrenzen und einen Eckbereich (7) der Kavität (8) zumindest bereichsweise ausbilden, mit einer die Kavität (8) zumindest teilweise ausbildenden Formplatte (10) und mit einer mit den Formbacken (2, 3, 4, 5) verbundenen Führung (11, 12, 13, 14) zur beweglichen Lagerung der Formbacken (2, 3, 4, 5) gegenüber der Formplatte (10), welche Führung (11, 12, 13, 14) für jeden Formbacken (2, 3, 4, 5) sowohl eine Backenführung (15, 15', 15" bzw. 15"') zur beweglichen Lagerung des Formbackens (2, 3, 4, 5) als auch eine Linearführung (16, 16', 16", 16"') zur beweglichen Lagerung der Backenführung (15, 15', 15" bzw. 15"') gegenüber der Formplatte (10) aufweist, wobei die gegenüber der Linearführung (16, 16', 16", 16"') geneigten Backenführungen (15, 15', 15" bzw. 15"') zweier Formbacken (2, 3 bzw. 4, 5) für ein Zusammenführen ihrer Formbackenflächen (6) bei geöffnetem Spritzgießwerkzeug (1) ausgebildet sind, **dadurch gekennzeichnet, dass** zwischen zwei Formbacken (2, 3 bzw. 4, 5) eine Koppelstange (17) zur mechanischen Bewegungskopplung der beiden Formbacken (2, 3 bzw. 4, 5) vorgesehen ist, wobei die an einem Formbacken (2 bzw. 4) befestigte Koppelstange (17) durch eine Öffnung (21) des anderen Formbackens (3 bzw. 5) geführt wird und in eine Führungskulisse (18) an der Backenführung (15' bzw. 15"') eingreift, die die Formbacke (3 bzw. 5) mit der Öffnung (21) für die Koppelstange (17) lagert.

2. Spritzgießwerkzeug nach Anspruch 1, **dadurch gekennzeichnet, dass** das Spritzgießwerkzeug (1) vier Formbacken (2, 3, 4, 5) aufweist.

3. Spritzgießwerkzeug nach einem der Ansprüche 1 bis 2, **dadurch gekennzeichnet, dass** die der Formplatte (10) schräg zulaufenden Linearführungen (16, 16', 16", 16'") den gleichen Winkel (19) zur Formplatte (10) aufweisen.

4. Spritzgießwerkzeug nach einem der Ansprüche 1 bis 3, **dadurch gekennzeichnet, dass** die Formbacken (2, 3, 4, 5) entlang der jeweiligen Backenschließplatte (23, 23', 23", 23"') der Backenführung (15, 15', 15" bzw. 15"') geführt sind.

5. Spritzgießwerkzeug nach einem der Ansprüche 1 bis 4, **dadurch gekennzeichnet, dass** die jeweilige Backenführung (15, 15', 15" bzw. 15"') durch zwei parallele Schwalbenschwanzführungen (20) ausgebildet wird.

## Claims

1. Injection moulding tool, in particular jaw tool, for producing a moulding which is at least partially film-coated over a corner region (7), in particular a bottle crate, comprising a cavity (8) for the moulding to be produced, comprising at least two moulding jaws (2, 3, 4, 5) which adjoin one another with their moulding jaw surfaces (6) when the injection moulding tool (1) is closed and form a corner region (7) of the cavity (8) at least in some regions, comprising a moulding plate (10) which at least partially forms the cavity (8) and comprising a guide (11, 12, 13, 14) connected to the moulding jaws (2, 3, 4, 5) for movable mounting of the moulding jaws (2, 3, 4, 5) with respect to the moulding plate (10), which guide (11, 12, 13, 14) for each moulding jaw (2, 3, 4, 5) has both a jaw guide (15, 15', 15" or 15"') for movable mounting of the moulding jaw (2, 3, 4, 5) and also a linear guide (16, 16', 16", 16"') for movable mounting of the jaw guide (15, 15', 15" or 15"') with respect to the moulding plate (10), wherein the jaw guides (15, 15', 15" or 15"') of two moulding jaws (2, 3 or 4, 5) which are inclined with respect to the linear guide (16, 16', 16", 16"") are configured for bringing together their moulding jaw surfaces (6) when the injection moulding tool (1) is open, **characterized in that** a coupling rod (17) is provided for mechanical movement coupling of the two moulding jaws (2, 3 or 4, 5) wherein the coupling rod (17) fastened to a moulding jaw (2 or 4) is guided through an opening (21) of the other moulding jaw (3 or 5) and engages in a guide link (18) on the jaw guide (15 or 15") which mounts the moulding jaw (3 or 5) with the opening (21) for the coupling rod (17).

2. The injection moulding tool according to claim 1, **characterized in that** the injection moulding tool (1) has four moulding jaws (2, 3, 4, 5).

3. The injection moulding tool according to one of claims 1 to 2, **characterized in that** the linear guides (16, 16', 16", 16"') running obliquely towards the moulding plate (10) have the same angle (19) to the moulding plate (10).

4. The injection moulding tool according to one of claims 1 to 3, **characterized in that** the moulding jaws (2, 3, 4, 5) are guided along the respective jaw closing plate (23, 23', 23", 23"') of the jaw guide (15, 15', 15" or 15"').

5. The injection moulding tool according to one of claims 1 to 4, **characterized in that** the respective jaw guide (15, 15', 15" or 15"') is formed by two parallel dovetail guides (20).

## Revendications

1. Outil de moulage par injection, en particulier moule à coins, pour la production d'une pièce moulée au moins partiellement tapissée de film par-dessus une zone d'angle (7), en particulier d'un casier à bouteilles, avec une cavité (8) pour la pièce moulée à produire, avec au moins deux coins de moule (2, 3, 4, 5) dont les surfaces de coin (6) sont contiguës l'une de l'autre quand l'outil de moulage par injection (1) est fermé et forment au moins en partie une zone d'angle (7) de la cavité (8), avec une plaque-modèle (10) formant au moins en partie la cavité (8) et avec un guide (11, 12, 13, 14) relié aux coins de moule (2, 3, 4, 5) pour l'appui mobile des coins de moule (2, 3, 4, 5) par rapport à la plaque-modèle (10), lequel guide (11, 12, 13, 14) présente pour chaque coin de moule (2, 3, 4, 5) aussi bien un guide de coin (15, 15', 15" ou 15"') pour l'appui mobile du coin de moule (2, 3, 4, 5) qu'un guide linéaire (16, 16', 16", 16"') pour l'appui mobile du guide de coin (15, 15', 15" ou 15"') par rapport à la plaque-modèle (10), les guides de coin (15, 15', 15" ou 15"') obliques par rapport au guide linéaire (16, 16', 16", 16"') de deux coins de moule (2, 3 ou 4, 5) étant conformés en vue de la réunion de leurs surfaces de coin (6) quand l'outil de moulage par injection (1) est ouvert, **caractérisé en ce qu'**il est prévu entre deux coins de moule (2, ou 4,5) une tringle de couplage (17) pour le couplage mécanique en mouvement des deux coins de moule (2, 3 ou 4, 5), la tringle de couplage (17) fixée sur un coin de moule (2 ou 4) étant guidée à travers une ouverture (21) de l'autre coin de moule (3 ou 5) et se mettant en prise dans une glissière de guidage (18) sur le guide de coin (15' ou 15"') qui supporte le coin de moule (3 ou 5) comportant l'ouverture (21) pour la tringle de couplage (17).

2. Outil de moulage par injection selon la revendication 1, **caractérisé en ce que** l'outil de moulage par injection (1) présente quatre coins de moule (2, 3, 4, 5).

3. Outil de moulage par injection selon l'une des revendications 1 à 2, **caractérisé en ce que** les guides linéaires (16, 16', 16", 16"') obliques vers la plaque-modèle (10) présentent le même angle (19) par rapport à la plaque-modèle (10).

4. Outil de moulage par injection selon une des revendications 1 à 3, **caractérisé en ce que** les coins de moule (2, 3, 4, 5) sont guidés le long de la plaque de fermeture du coin (23, 23', 23", 23"') correspondante du guide de coin (15, 15', 15" ou 15"').

5. Outil de moulage par injection selon une des revendications 1 à 4, **caractérisé en ce que** chaque guide de coin (15, 15', 15" ou 15"') est formé de deux guides en queue d'aronde (20) parallèles.
